# EUROPEAN PATENT APPLICATION

(11) **EP 4 793 146 A1**
(43) Date of publication of application: **19.08.2026**
(21) Application number: 26158376.9
(22) Date of filing: 13.02.2026
(51) Int. Cl.: B62D 35/00, B60K 11/06

(54) **ROAD VEHICLE WITH INNOVATIVE HEAT DISSIPATION FEATURE**

(30) Priority: 14.02.2025 IT 202500002847
(71) Applicant: FERRARI S.p.A., 41100 Modena (IT)
(72) Inventor: SEDDA, Salvatore, 41100 MODENA (IT); TOTO, Diego, 41100 MODENA (IT)
(74) Representative: Studio Torta S.p.A.

(57) **Abstract**

A road vehicle (1) comprising: a roll axis (X), a pitch axis (Y) and a yaw axis (Z); an external chassis provided with one or more aerodynamic elements (5,6,16,17) over which an aerodynamic flow flows when the vehicle moves forward; a cooling circuit wherein a cooling fluid circulates; wherein at least one of the aerodynamic elements (5,6,16,17) of the external chassis is part of the cooling circuit and is configured to allow the cooling fluid to flow through it in such a way as to permit the transfer of heat from the cooling fluid to the aerodynamic flow.

## Description

### CROSS-REFERENCE TO RELATED APPLICATIONS

This patent application claims priority from Italian patent application no. 102025000002847 filed on February 14, 2025, the entire disclosure of which is incorporated herein by reference.

### Technical Field of the Invention

This invention relates to a road vehicle, in particular a sports car. In this context, this invention will address the problem of providing a new disposal function for the heat produced.

### State Of The Art

As is well known, a road vehicle is a vehicle whose extension and dynamics are defined by three mutually orthogonal axes known as the roll axis (or longitudinal axis), pitch axis (or transversal axis) and yaw axis (or vertical axis). A road vehicle comprises four wheels, respectively a right front wheel, a left front wheel, a right rear wheel and a left rear wheel. The wheels represent the point of contact of the vehicle with the surface on which the vehicle moves forward. Vehicles comprise suspensions on one side connected to the wheels and on the other side to a chassis and are configured to keep the chassis in a suspended configuration (known as the suspended mass). Along the roll axis, the vehicle chassis comprises a front portion configured to penetrate the air as the vehicle moves forward, a passenger compartment configured to accommodate at least one user and a rear portion beyond which the aerodynamic flow flowing above and below the vehicle detaches. Regardless of the type of propulsion envisaged (a vehicle with an endothermic engine and/or electric motor), a cooling circuit must be provided in which fluid is circulated near the elements to be thermally controlled where heat is transferred from these elements to the fluid. The heat drawn from the fluid must then be dissipated to allow the fluid to cool and be fed back to the elements to be thermally controlled. Therefore, along the circuit in which the cooling fluid flows, there is at least one radiator where the heat passes from the cooling fluid to the air. To allow this passage of heat from the cooling fluid to the air, a radiator for road vehicles usually comprises a heat exchanger in the form of a parallelepipedal metal plate consisting of a grate of tubes, in which the cooling fluid passes, interspersed with fins. To maximise the passage of heat from the cooling fluid to the air, the radiator is usually arranged in the central portion of the front end of the vehicle with one side of the heat exchanger facing the air into which the vehicle penetrates during forward motion essentially orthogonal to the roll axis. To increase the air stream and ensure a flow at the radiator even at low speeds or when the vehicle is stationary, it is known to provide a fan configured to force air against the metal heat exchanger. Of course, the number, position of the radiator and its inclination with respect to the roll axis may vary depending on the type of vehicle.

In some cases, it is possible that the demand for heat dissipation is such that the function can only be completely fulfilled with large radiators and/or a strong air flow. Both possible solutions entail major problems during implementation on the car because, on the one hand, they result in structural problems (of bulk and weight) and, on the other hand, in aerodynamic problems, especially related to increased drag and vertical load loss.

This invention takes as its starting point a vehicle equipped with at least one radiator as described above and, starting from this configuration, it seeks to offer an innovative solution that allows the heat dissipation function to be performed by another vehicle component hitherto intended only for another function and potentially enabling at least one of the radiators in the circuit to be eliminated.

### Subject and Summary of the Invention

According to this invention, a vehicle is provided as set forth in the appended claims.

The starting point of this invention, understood as the minimum elements required for understanding and implementing this invention, is a road vehicle comprising:
- a roll axis X, a pitch axis Y and a yaw axis Z;
- an external chassis that defines, along the roll axis X, a front end, a passenger compartment and a rear end, in which the external chassis is equipped with one or more aerodynamic elements (for example, a wing or airfoils or a spoiler) over which the aerodynamic flow flows as the vehicle moves forward;
- a cooling circuit wherein a cooling fluid circulates that is configured to draw heat from certain internal vehicle components (for example, the engine/motor and/or battery for endothermic, electric or hybrid vehicles).

These elements are well known to the person skilled in the art and, therefore, other construction details can be omitted. In this context, the innovative aspect of this invention is that the cooling circuit also comprises at least one of the aerodynamic elements of the external chassis mentioned above, whereby this at least one aerodynamic element (now also a radiant element) is configured to allow the cooling fluid to flow through it in such a way that heat is transferred from the cooling fluid to the aerodynamic flow. The proposed solution thus exploits the high tangential stress exerted by the aerodynamic flow on the surfaces of certain external chassis elements to completely fulfil, or at least increase, the heat dissipation capacity of a vehicle cooling circuit. Thus, the thermal function is integrated into elements normally unrelated to the conventional cooling circuit with the aim, in the best embodiments, of increasing the heat dissipation of the cooling fluid with the minimum objective of reducing the number of radiators present or avoiding the use of a conventional radiator to dissipate heat..

To this end, each aerodynamic element that forms part of the cooling circuit is preferably modified to fulfil its dual (classic aerodynamic and now also innovative radiant) function. Each aerodynamic element that forms part of the cooling circuit is preferably made of material with high thermal conductivity, preferably aluminium. In each aerodynamic element that forms part of the cooling circuit there is, preferably, a plurality of ducts for the passage of the cooling fluid (these ducts preferably extend along a direction orthogonal to the aerodynamic flow). At least one of the aerodynamic elements forming part of the cooling circuit preferably comprises at least one surface on which the aerodynamic flow flows and on which a plurality of parallel heat-dissipation fins are made. These fins preferably extend in height and along a direction parallel to the aerodynamic flow.

Upstream and downstream of each aerodynamic element forming part of the cooling circuit, the cooling circuit comprises an upstream manifold, to feed the plurality of ducts obtained in the aerodynamic element, and a downstream manifold, fed by the plurality of ducts.

According to one embodiment of this invention, the front end of the vehicle comprises at least one airfoil along the pitch axis Y that acts as an aerodynamic element forming part of the cooling circuit. Even more preferably, the front end comprises two airfoils in series with each other along the roll axis X, where both airfoils are part of the cooling circuit in parallel and are connected to common upstream and downstream manifolds.

According to one embodiment, in addition to the innovative radiant airfoil of this invention, for heat dissipation the cooling circuit also comprises at least one radiator with an exchanger exposed to an air stream (different from the aerodynamic flow). As is well known, the cooling fluid flows through the heat exchanger so that heat is transferred from the cooling fluid to the air stream.

According to one embodiment, which will also be shown in the figures, the cooling circuit comprises a right-hand radiator on the right side of the at least one radiant airfoil along the pitch axis Y and/or a left-hand radiator on the left side of the at least one airfoil along the pitch axis Y.

To summarise, this invention integrates two functions, aerodynamic and thermal, with savings in the cooling system size, a reduction in the number of radiators with consequent savings in vehicle weight, and a reduction in vehicle packaging constraints. Each radiant airfoil has external fins to increase the heat exchange surface area, is made of thermally conductive material, and is perforated internally to allow the passage of the cooling fluid, which in turn can also be cooled by classic heat exchange mechanisms upstream and/or downstream of the radiant airfoil. The characteristics of the channels inside the radiant airfoil (number, diameter, pitch) may vary to be defined with the aim of optimising the heat exchange between the air and the internal wall of the profiles, taking into account the load loss. The geometry of the fins on the radiant airfoil surface (pitch, height, thickness) can vary so as to be defined with the aim of optimising heat exchange between the air and the outer wall of the airfoils, taking into account the design aerodynamic coefficients (trade-off between "skin friction"/heat exchange surface and aerodynamic behaviour of the vehicle).

### Brief Description of the Drawings

For a better understanding of this invention, an embodiment thereof will now be described, purely by way of a non-limiting example, with reference to the accompanying drawings, wherein:
- Figure 1 is a schematic view of a sports car that may be improved thanks to this invention;
- Figures 2 and 3 are respectively a front view of a vehicle and the corresponding diagram of the cooling circuit according to the prior art;
- Figures 4 and 5 show, respectively, an innovative diagram of a cooling circuit according to this invention and a front view of a vehicle housing it;
- Figures 6 and 7 show details of the innovative radiant airfoil of this invention.

### Preferred Embodiments of the Invention

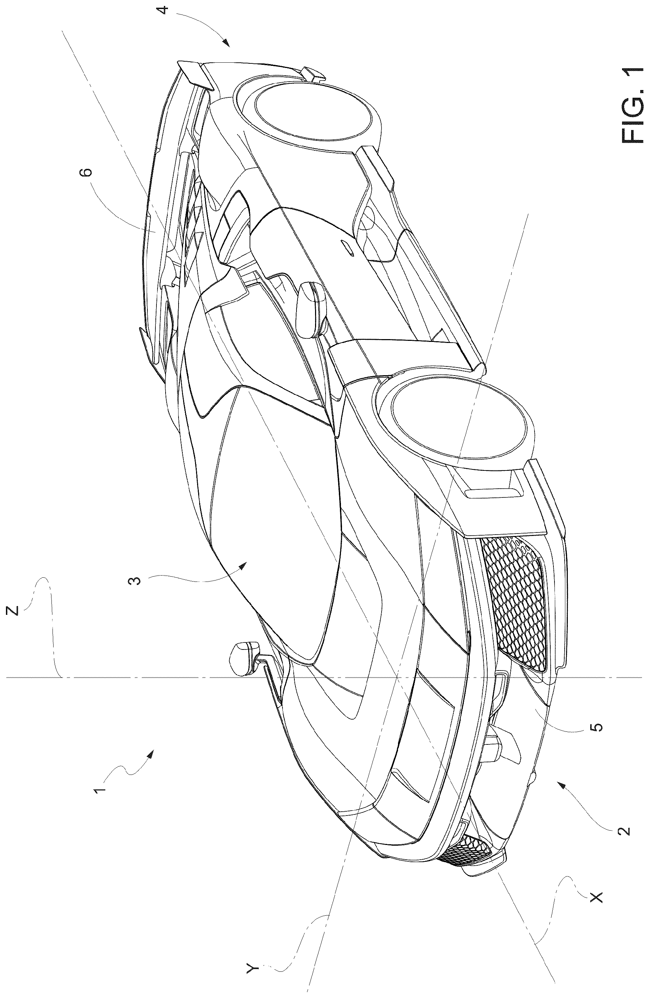

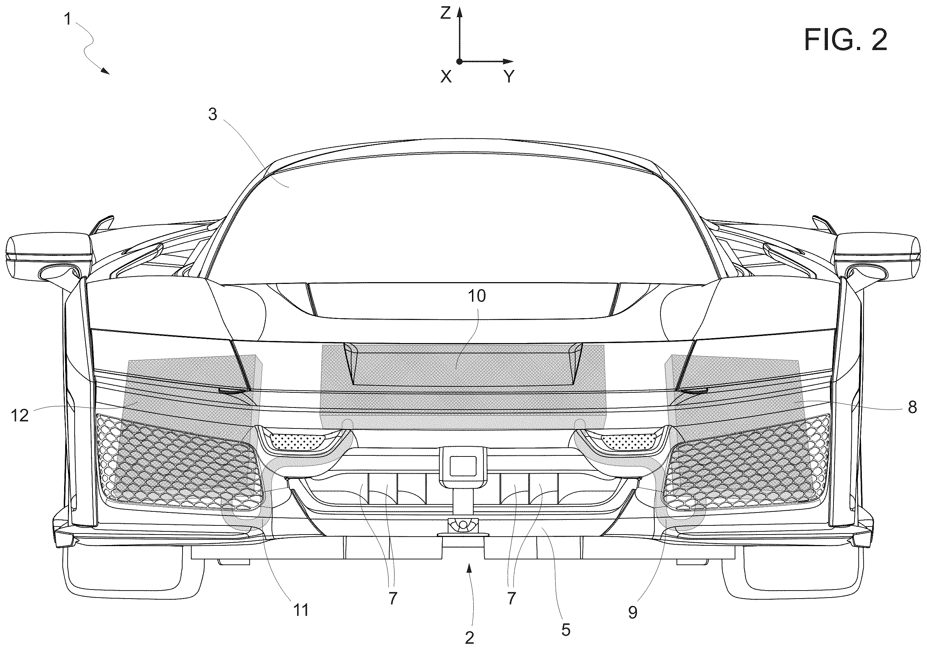

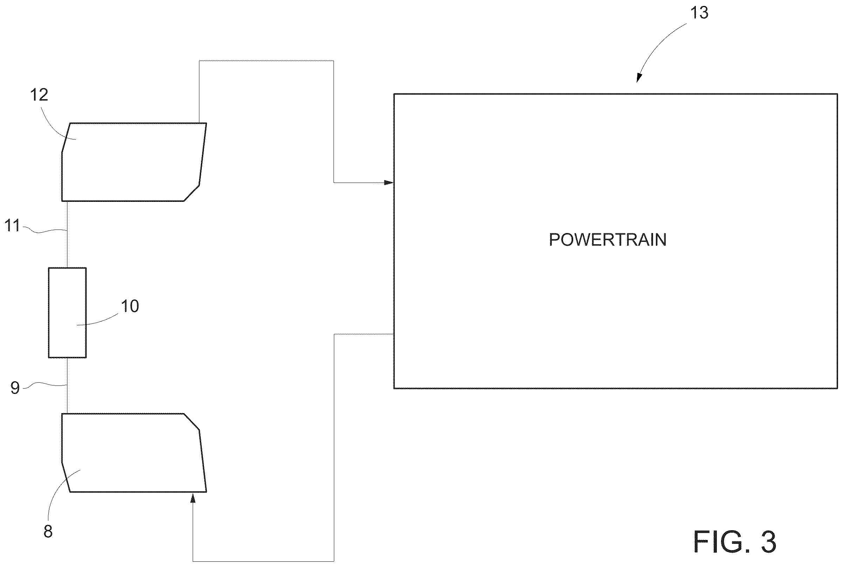

Figure 1 is a schematic view of a sports car that may be improved thanks to this invention. The vehicle is generally denoted with reference number 1 and, as is known for any road vehicle, its geometry and dynamics are described with respect to its roll X, pitch Y and yaw Z axes. The vehicle 1 comprises an external chassis that identifies a front portion or front end 2 along the roll axis X configured to penetrate the air as it moves forward, a passenger compartment 3 to accommodate at least the driver and a rear end 4 beyond which the aerodynamic flow detaches from the vehicle. The vehicle in Figure 1, and in general the vehicle of this invention, is a sports vehicle because its chassis comprises at least one aerodynamic element. In this example, as aerodynamic elements, there are present a front multiple airfoil wing 5 and a rear wing 6 and an aerodynamic bottom with an extractor profile at the rear end. Figures 2 and 3 are respectively a front view of a vehicle and the corresponding diagram of the cooling circuit according to the prior art. Figure 2, in particular, is a view of the front end 2 along the roll axis in which the front end is shown in transparency to show some of the components integrated right in the front end. In particular, there is a right-hand radiator 8 located in front of the right front wheel that intercepts part of the air stream generated by the advance and is also equipped at the rear with a fan to supply air to the radiator even in the absence of the air stream generated by the advance. A right-hand duct 9 starts from the right-hand radiator 8 connecting the right-hand radiator 9 to a central radiator 10 located above the front wing 5. A left-hand duct 11 starts from the central radiator 10 connecting the central radiator 10 to a left-hand radiator 12 that is similar to the right-hand radiator 8. In Figure 2, reference number 7 identifies other aerodynamic elements arranged between the central radiator 10 and the wing 5 on either side of which run the ducts 9 and 11. Figure 3 shows the cooling circuit diagram of the vehicle in Figure 2, and it can be seen that the radiators 8, 10 and 12 in series with each other and placed in the front end 2 are part of a cooling circuit in which a cooling fluid flows through a part of the circuit denoted with reference number 13 in which it draws heat from certain components to be cooled before passing through the radiators 8, 10 and 12 in series in which it gives up heat to the air passing through the corresponding exchangers.

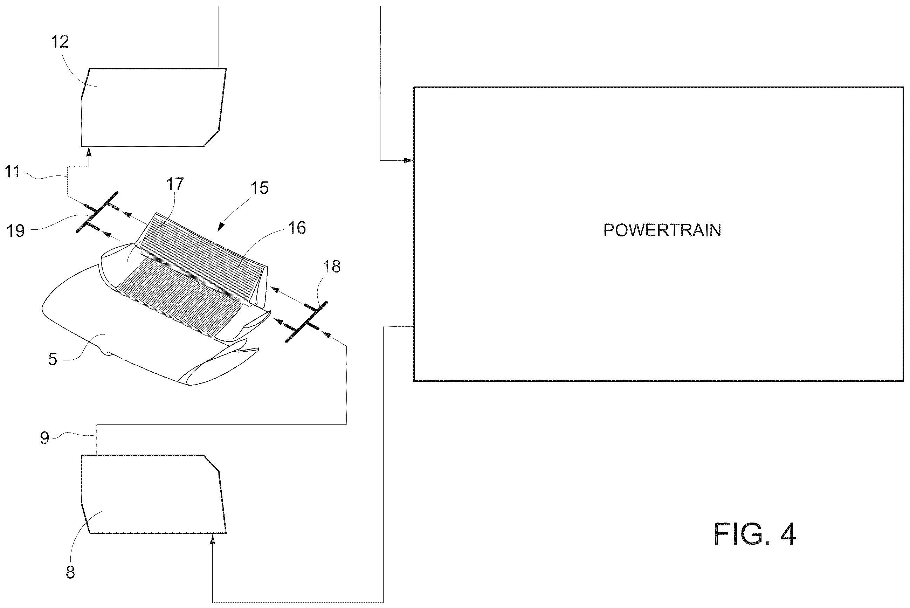

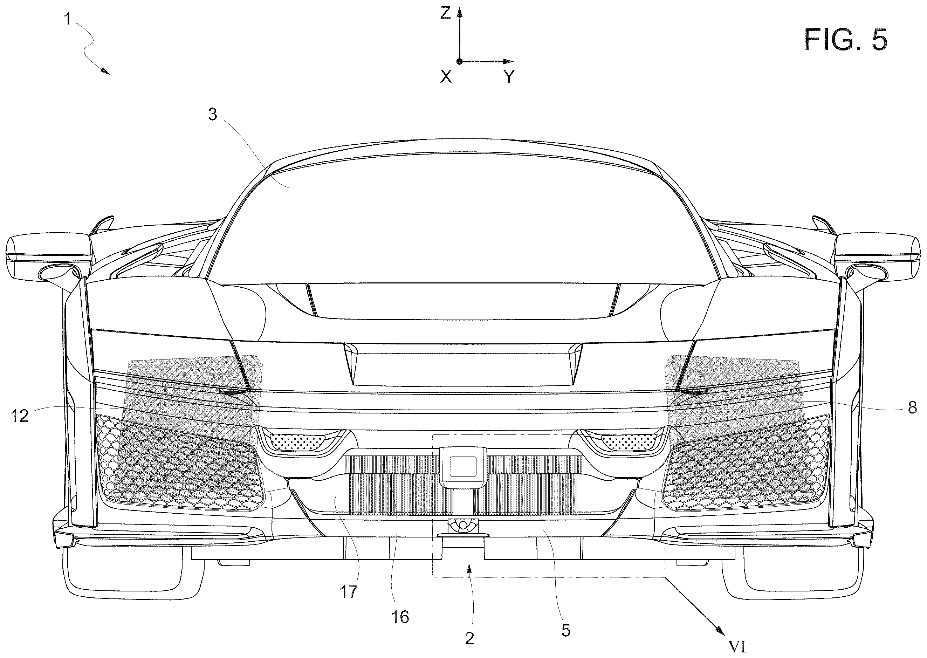

Figures 4 and 5 show, respectively, an innovative diagram of a cooling circuit according to this invention and a front view of a vehicle housing it. Analysing Figure 4, it immediately jumps out that in this embodiment according to this invention the central radiator 10 has been replaced with a new unit 15 that has a dual aerodynamic and radiant function. In fact, the unit 15 comprises a double airfoil 16, 17 placed in series along the roll axis and in which each airfoil 16, 17 extends along the pitch axis Y. According to this invention, the two airfoils 16 and 17 are part of the cooling circuit because the cooling fluid exiting the right-hand radiator 8 is circulated within them before being fed to the left-hand radiator 12. Reference numbers 18 and 19 identify two manifolds that connect the inner channels of the airfoils with the ducts 9 and 11.

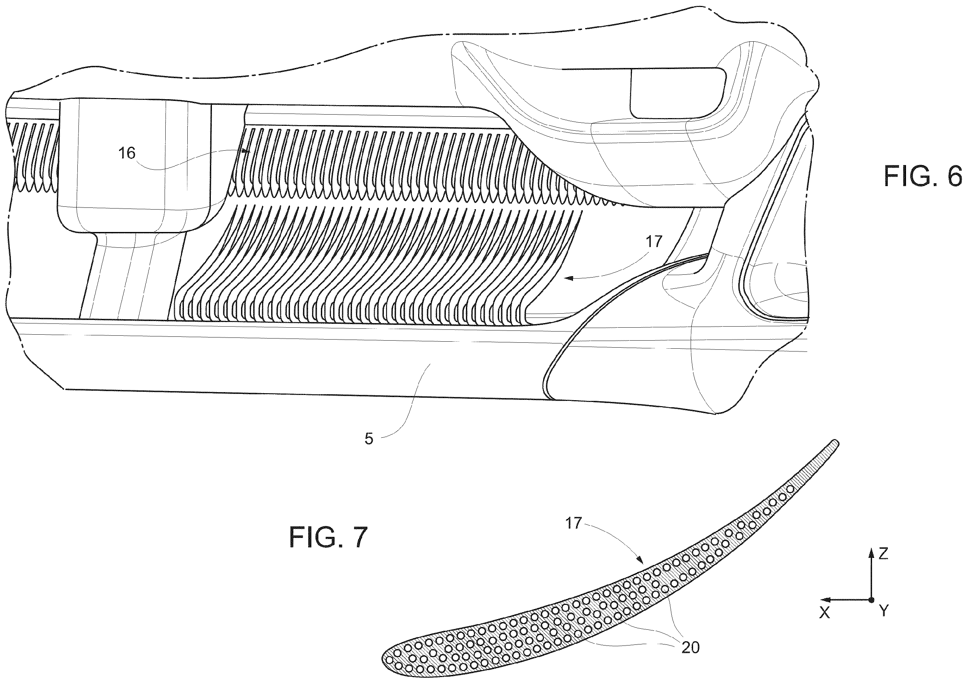

Figures 6 and 7 show details of the innovative double radiant airfoil unit of the preceding figures. In particular, Figure 6 shows how there is a plurality of heat-dissipation fins that are parallel to the aerodynamic flow direction on the aerodynamic surface of both airfoils 16, 17. Figure 7 shows a cross section along the plane Z-X of the radiant airfoil 17 clearly showing all the channels 20 along the direction Y that allow the cooling fluid to flow from one side to the other of the radiant airfoil 17 itself.

Lastly, it is clear that modifications may be made to the embodiments described and illustrated herein, and variations produced thereto, without departing from the scope of this invention, as set forth in the claims.

## Claims

1. A road vehicle (1) comprising:
- a roll axis (X), a pitch axis (Y) and a yaw axis (Z);
- an external chassis provided with one or more aerodynamic elements (5, 6, 16, 17) over which an aerodynamic flow flows when the vehicle (1) moves forward;
- a cooling circuit wherein a cooling fluid circulates; **characterised by** the cooling circuit comprising at least one of the aerodynamic elements (5, 6, 16, 17) of the external chassis wherein said at least one aerodynamic element (5, 6, 16, 17) is configured to allow the cooling fluid to flow through it in such a way as to permit the transfer of heat from the cooling fluid to the aerodynamic flow.

2. The vehicle as claimed in claim 1, wherein each aerodynamic element (5, 6, 16, 17) forming part of the cooling circuit is made of a material with high thermal conductivity, preferably aluminium.

3. The vehicle as claimed in claim 1 or 2, wherein each aerodynamic element (5, 6, 16, 17) forming part of the cooling circuit comprises a plurality of ducts (20) for the passage of the cooling fluid.

4. The vehicle as claimed in claim 3, wherein the cooling fluid ducts (20) extend along a direction orthogonal to the aerodynamic flow.

5. The vehicle as claimed in claim 4 or 3, wherein the cooling circuit comprises an upstream manifold (18) to feed the plurality of ducts (20) and a downstream manifold (19) fed by the plurality of ducts (20).

6. The vehicle as claimed in any one of the preceding claims, wherein the external chassis defines a front end (2), a passenger compartment (3) and a rear end (4) along the roll axis (X); wherein the front end (2) comprises at least one airfoil (16) along the transversal pitch axis (Y) as an aerodynamic element forming part of the cooling circuit.

7. The vehicle as claimed in claim 6, wherein the front end comprises two airfoils (16, 17) in series with each other along the roll axis (X); wherein both airfoils (16, 17) are part of the cooling circuit in parallel.

8. The vehicle as claimed in claim 7, wherein there is an upstream manifold (18) to feed both airfoils and a downstream manifold (19) fed by both airfoils (16, 17).

9. The vehicle as claimed in any one of the preceding claims, wherein the cooling circuit further comprises at least one radiator (8) with an exchanger exposed to an air stream wherein the cooling fluid flows so as to allow heat transfer from the cooling fluid to the air stream.

10. The vehicle as claimed in claim 9, when dependent on any one of 4-8, wherein the cooling circuit comprises a right-hand radiator (8) on the right side of the at least one airfoil along the pitch axis (Y) and/or a left-hand radiator (12) on the left side of the at least one airfoil along the pitch axis (Y).

11. The vehicle as claimed in any one of the foregoing claims, wherein at least one aerodynamic element (16, 17) forming part of the cooling circuit comprises at least one aerodynamic flow contact surface provided with a plurality of parallel heat dissipation fins.

12. The vehicle as claimed in claim 11, wherein the fins extend along a direction parallel to the aerodynamic flow.
